# EUROPEAN PATENT APPLICATION

(11) **EP 1 538 735 A1**
(43) Date of publication of application: **08.06.2005**
(21) Application number: 03795243.9
(22) Date of filing: 27.08.2003
(51) Int. Cl.: H02P 1/30, H02P 7/63

(54) **CONTROL METHOD OF INDUCTION MOTOR**

(30) Priority: 13.09.2002 JP 2002267779
(71) Applicant: Fuji Electric FA Components & Systems Co., Ltd., Tokyo 141-0032 (JP); Tsudakoma Kogyo Kabushiki Kaisha, Kanazawa-shi, Ishikawa-ken 921-8650 (JP)
(72) Inventor: Takamoto, Y., c/o Fuji Electric FA Components &, Shinagawa-ku, Tokyo 141-0032 (JP); Ishida, Ichiro,c/o Fuji Electric FA Components &, Shinagawa-ku Tokyo 141-0032 (JP); Takano, Toshio, Kanazawa-shi, Ishikawa 921-8650 (JP); Takashima, Makoto, Kanazawa-shi, Ishikawa921-8650 (JP)
(74) Representative: Epping Hermann & Fischer
(86) International application number: PCT/JP2003/010855
(87) International publication number: WO 2004/025819

(57) **Abstract**

A control method of an induction motor suitable for an induction motor requiring a very large driving torque at the time of starting or acceleration of a textile machine or the like, wherein a variable voltage variable frequency (VVVF) inverter (8) feeding power to the primary winding of the induction motor (9) increases to output voltage and output frequency after startup while keeping the output current from the inverter not higher than a specified current limit level, reduces only the output voltage of the VVVF inverter (8) down to a specified voltage set level after finishing acceleration of the induction motor (9), and then supplies an AC voltage corresponding to the frequency set level and the voltage set level continuously from the VVVF inverter (8) to the induction motor (9).

## Description

### Technical Field

The present invention relates to a control method of an induction motor used as a power source of industrial machines such as a textile machine in particular requiring a very large driving torque at the time of starting.

### Background Art

Up to now, the control method for this type of induction motor included that of, first of all, connecting the induction motor to a commercial power source to start the induction motor, and, after the motor has reached almost stable rotation speed, separating this induction motor from the commercial power source, and connecting the motor to the output of a variable voltage variable frequency (VVVF) inverter on which a freely chosen frequency may be set instead. (See, for example, Patent Document 1.)

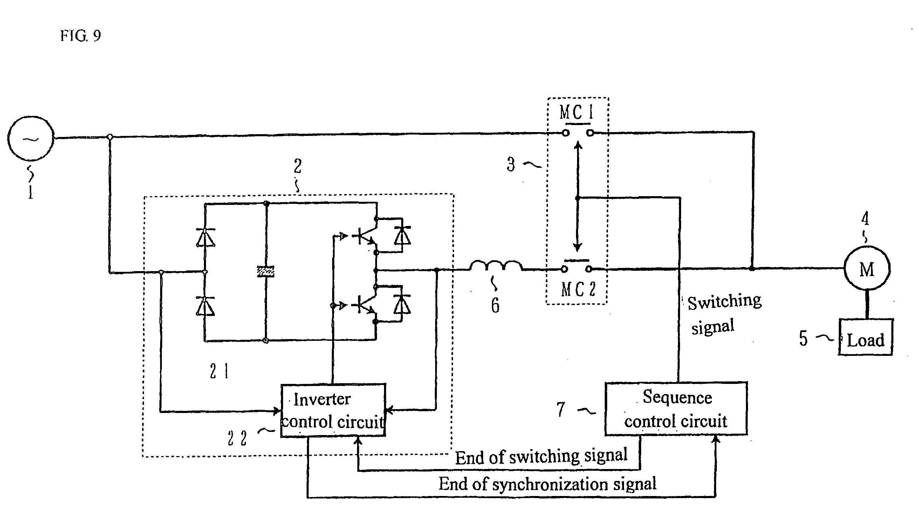

However, the control method of induction motor according to the Patent Document 1 described above presents some problems, which will be described below with reference to the circuitry diagram of the control method of a conventional induction motor shown in Fig. 9.

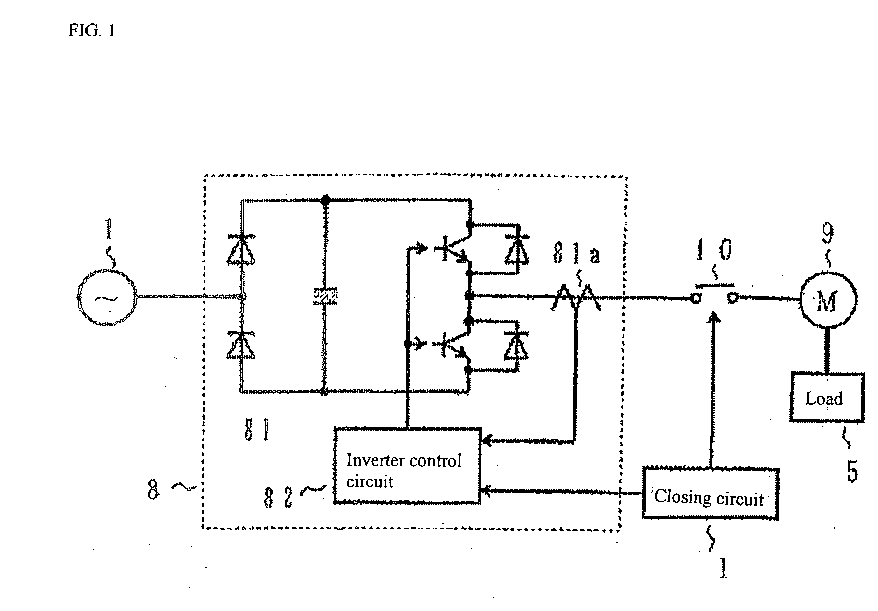

Specifically, in Fig. 9, 1 represents a commercial power source, 2 represents a variable voltage variable frequency (VVVF) inverter consisting of an inverter main circuit 21 and an inverter control circuit (22), 3 represents a change-over switching circuit consisting of electromagnetic contactors MC1 and MC2, 4 represents an induction motor, 5 represents a textile machine and other loads driven by the induction motor 4, 6 represents an AC reactor and 7 represents a sequence control circuit.

The VVVF inverter 2 can output an AC voltage with its phase synchronized with a voltage phase of the commercial power source 1 by the controlling operation of the inverter control circuit 22, and the control method of the induction motor 4 in the circuit configuration shown in Fig. 9 will be described below.

To begin with, a sequence control circuit 7 gives an "ON" signal to the MC1 as a changeover signal to the change-over switching circuit 3 of which both electronic contactors MC1 and MC2 are in the open circuit state, and when the electromagnetic contactor MC1 is closed, the induction motor 4 to which power began to be fed from the commercial power source 1 starts running together with the load 5, and soon thereafter the induction motor 4 rotates at a rotation speed corresponding to the frequency of the commercial power source 1 to complete the starting process.

This ON command to MC1 causes the VVVF inverter 2 to start, and this VVVF inverter 2 swiftly increases the output voltage with the minimum allowable frequency and the minimum allowable voltage to the output voltage with the rated frequency and the rated voltage of the commercial power source 1.

Then, the inverter control circuit 22 monitors the voltage phase of any one phase corresponding to the commercial power source 1, and the voltage phase of the phase corresponding to the commercial power source 1 mentioned above of the output voltage of the VVVF inverter 2, and both of them match for example for some cycles, sends a end of synchronization signal to the sequence control circuit 7.

Then, in response to the end of synchronization signal mentioned above emitted after the induction motor 4 had completed its startup at a rotation speed corresponding to the frequency of the commercial power source 1, the sequence control circuit 7 emits an open circuit command to MC1 as a changeover signal, and in response thereto the electromagnetic contactor MC1 opens the circuit, and after some dead time (for example approximately 10mS - 20mS), in response to a close circuit command emitted to MC2 as a changeover signal, the electromagnetic contactor MC2 closes the circuit, and the power feeding to the induction motor 4 is switched over from the commercial power source 1 to the VVVF inverter 2. At this time, the AC reactor 6 provided in the passage from the VVVF inverter 2 to the induction motor 4 limits inrush current from the VVVF inverter 2 to the induction motor 4.

And finally, the VVVF inverter 2 gradually changes the output voltage of the VVVF inverter 2 to the AC voltage with the frequency and voltage required by the induction motor 4, and the load 5 passes to the working condition.

### [Patent Document 1]

### Japanese Utility Model Publication Laid Open No. 61-90877 (pages 3-8. Fig. 1)

### [Issues that the Invention Attempts to Resolve]

In the conventional circuit configuration shown Fig. 9, it is necessary that the VVVF inverter 2 consist of the inverter main circuit 21 that, through a diode rectifier and a smoothing capacitor, converts the AC current of the commercial power source 1 into a DC voltage, which will be converted into an AC voltage by a back-to-back circuit of transistors and diodes bridge connected to the inverter main circuit 21, and the inverter control circuit 22 having a control function for outputting the desired frequency and voltage from the inverter main circuit 21 by, for example, turning on and off by means of PWM (pulse width modulation) control and another control function for outputting an AC voltage of the phase synchronized with the voltage phase of the commercial power source 1. As a result, this VVVF inverter 2 has a more convoluted circuit configuration than general-purpose VVVF inverters for outputting simply an AC voltage of the desired frequency and voltage. In addition, it requires a changeover switching circuit 3, an AC reactor 6, a sequence control circuit 7 and the like, and the whole circuit configuration shown in Fig. 9 is also convoluted.

And the AC reactor 6 curtails the inrush current from the VVVF inverter 2 to the induction motor 4. At this time, the rotation speed of the induction motor 4 changes, and this change was sometimes not favorable for the load 5.

In addition, since the induction motor 4 that requires a very large driving torque at the time of startup of the textile machine mentioned above and the like is started by power fed from the commercial power source 1, the working duty of the VVVF inverter 2 is mitigated, but the rotation speed of the induction motor 4 after the completion of its startup depends on the frequency of the commercial power 1, and as a result, when the output frequency required by the induction motor 4 is different from the frequency of the commercial power source 1, the VVVF inverter 2 begins supplying power, and finally an operation of conforming to the AC voltage of frequency required by the induction motor 4. Thus, it often required time to put the load 5 in a working condition.

An object of the present invention is to provide a control method of induction motor that resolves various problems mentioned above.

### Disclosure of the Invention

The control method of induction motor of this first invention consists of, first of all, starting supplying power to start the induction motor by having the variable voltage variable frequency inverter output an AC voltage of the allowable lowest frequency and the allowable lowest voltage to the induction motor of which the primary winding is star connected, then having the inverter increase its output frequency and output voltage, and after this output frequency has reached the predetermined set level of frequency, having the inverter decrease only its output voltage to the predetermined set level of voltage while keeping its output frequency at the predetermined set level of frequency, and then having the inverter supply an AC voltage based on the set level of frequency and the set level of voltage to the induction motor.

And the control method of induction motor of the second invention consists of, in the first place, starting to supply power to the induction motor by having the variable voltage variable frequency inverter output an AC voltage of the specified frequency and amplitude while a brake connected with the induction motor or the load of the induction motor is working, putting thus the induction motor in excited state while a brake connected with the induction motor or the load of the induction motor is operating, and then having the inverter increase its output frequency and output voltage when the brake is almost fully released in response to a release command given to the brake, and after this output frequency has reached the predetermined set level of frequency, having the inverter decrease only its output voltage to the predetermined set level of voltage point while keeping its output frequency at the set level of frequency mentioned above, and then having the inverter supply an AC voltage based on the set level of frequency and the set level of voltage to the induction motor.

In the second invention mentioned above, the induction motor is not limited to that of which the primary winding is delta connected but an induction motor of which the primary winding is star connected may also be used.

The induction motor may be used for driving textile machines, for example a loom (for driving the main shaft). And in case of an induction motor for driving a loom, when it is pre-excited while the brake is working as described in the second invention, it is possible to start up and bring quickly the induction motor to a steady rotation speed while suppressing the inrush current arising from the acceleration of the induction motor for starting the loom. Moreover, the main shaft of the loom remains still due to the braking operation during the preliminary excitation period, and then at the time of reed beating following the startup of the induction motor, the reed beating torque remains steady without any variations. As a result, weaving bars can be better eliminated by this system in comparison with the one without any braking operation at the time of preliminary excitation.

As described above, when the output frequency and output voltage of the inverter are to be increased at a predetermined rate of increase, it is possible preferably to increase the output frequency with passage of time by a specified rate of increase and to gradually increase them preferably by increasing gradually the output voltage according to the predetermined voltage-frequency ratio (V/F ratio) to a voltage corresponding to the increased frequency. And the voltage-frequency ratio (V/F ratio) used for increasing them are determined by the frequency set level at the end of startup (operating frequency set level) and the predetermined voltage set level (the first voltage set level). The voltage set level used in the subsequent step for decreasing the output voltage while maintaining the output frequency at the frequency set level (the second voltage set level) is determined in such a way that the voltage corresponding to the steady operation of the induction motor may be outputted, while the predetermined voltage set level described above (the first voltage set level) is set at a value greater than the voltage set level (the second voltage set level).

Accordingly, when the output frequency has reached the predetermined frequency set level (the operating frequency set level) due to an increase in the output frequency, the output voltage may be increased gradually so that it may reach the predetermined voltage set level (the first voltage set level) higher than the voltage set level used for decreasing the output voltage of the following step (the second voltage set level) and set within a range where appropriate startup is possible. And as for the setting of an increase rate to frequency, it may be set at a fixed increase rate with the passage of time, or it may be set at an increase rate increasing or decreasing with the passage of time, and with regard to the mode of increase, it may be set to increase continuously or by step.

In case of a textile machine, for example, a loom, the second voltage set level is set near the rated voltage required for the steady operation of the loom in order to raise more sharply the rotation speed of the loom for the purpose of preventing weaving bars. By so doing, it is possible to prevent weaving bars resulting from insufficient power of reed beating just after the startup of the loom by a sharp rise in the rotation speed by the previous step, and it will be possible to operate continuously the induction motor without overheating by reducing the set voltage of the following step to the second voltage set level by the following step. In particular, when a motor used for driving a textile machine, for example a loom (for driving the main shaft), of which the primary winding is delta connected at the time of its startup, and switched to star connection after rising to the steady rotation speed is used, it is possible to preferably set the first voltage set level and the second voltage set level at a rate of √3:1. Incidentally, in any of the cases mentioned above, the primary winding of the induction motor is fed temporarily with overvoltage at the startup of the loom. However, because of a very short feeding of power, it does not greatly affect rise in temperature of the induction motor.

And the frequency set level (operating frequency set level) may be set to correspond the set rotation speed of the induction motor. For example, setting the same to correspond to the inverter used to drive the loom (drive the main shaft) enables to obtain the effect mentioned above and to set and change easily the rotation speed of the loom.

When the output frequency and output voltage of the inverter are to be increased respectively at the predetermined rate of increase, it is possible to limit the output current of the inverter to not higher than the predetermined upper limit. Because of the limitation of the output current of the inverter to not higher than the upper limit, any voltage drop in the textile mill resulting from inrush current at the start of the induction motor can be curtailed, and the capacity of power equipment in the whole textile mill wherein a large number of looms are disposed can be curtailed. And it will be possible to adopt inverters having a capacity smaller than the previous ones, and to reduce the production costs of looms. And it is more preferable that the inverter would take controlling operation to limit the output torque of the induction motor in order to reduce its output current to not higher than the upper limit.

And when the inverter reduce only its output voltage to the predetermined voltage set level while keeping its output frequency, the inverter may do this by switching and outputting its output voltage from the directly previous voltage to the voltage set level, or the inverter may gradually decrease its output voltage by a chronologically fixed or changing rate of decrease. The adoption of the latter from among the two methods mentioned above is more preferable since it does not create shocks to the output shaft of the induction motor when the output voltage is to be reduced. Incidentally, this rate of decrease may be set at a value based on the secondary time constant of the induction motor, and may be set depending on the magnitude of the secondary time constant.

The third invention is the control method of induction motor according to the first or second invention, wherein the output current of the inverter is kept at no more than the predetermined upper limit of the inverter, and when the output frequency and the output voltage of the inverter are to be increased, the induction motor is compensated for its slipping and the primary voltage by means of the vector control of the induction motor.

The fourth invention is the control method of induction motor according to the first or second invention wherein the output current of the inverter is kept at no more than the predetermined upper limit of the inverter, and when the output frequency and the output voltage of the inverter are to be increased, a control operation is carried out to limit the output torque of the induction motor in order to reduce the output current of the inverter to no more than the upper limit mentioned above.

The fifth invention is the control method of induction motor according to the first or second invention wherein the rate of decrease set in the inverter is set at a value based on the secondary time constant of the induction motor.

The present invention, noting that an induction motor of which the primary winding is delta connected can make the driving torque outputted by the induction motor to the AC voltage fed by the variable voltage variable frequency (VVVF) inverter stronger (in concrete term approximately three (3) times) than that outputted by an induction motor of which the primary winding is star connected, and taking advantage of the output current limiting function of this VVVF inverter, the general-purpose VVVF inverter makes successive operations of promptly starting accelerating the induction motor for driving loads requiring a very large driving torque at the time of startup of a textile machine and the like and operations of causing only the output voltage of the VVVF inverter to drop noting that the induction motor can be operated with a small driving torque after this startup and acceleration have been completed.

### Brief Description of the Drawings

Fig. 1 is a circuit diagram showing a first embodiment of the present invention.
Fig. 2 is a wave form chart describing the operations in Fig. 1.
Fig. 3 is a circuit diagram showing a second embodiment of the present invention.
Fig. 4 is a partial enlarged detail of the circuit configuration shown in Fig. 3.
Fig. 5 is a wave form chart describing the operations in Figs. 3 and 4.
Fig. 6 is a partial enlarged detail of the circuit configuration shown in Fig. 3.
Fig. 7 is a circuit diagram showing another embodiment of the second embodiment.
Fig. 8 is a wave form chart describing the operations in Figs. 4 and 5.
Fig. 9 is a circuit diagram showing a prior embodiment.

### [Description of signals]

1. Commercial power source. 2. VVVF inverter. 3. Changeover switching circuit. 4. Induction motor. 5. Load. 6. AC reactor. 7. Sequence control circuit. 8. VVVF inverter. 9. Induction motor. 9a. Brake. 10. Electromagnetic contactor. 11. Closing circuit. 12. VVVF inverter. 13. Circuit breaker. 21. Inverter main circuit. 22. Inverter control circuit. 81. Inverter main circuit. 81a. Current detector. 82-84. Inverter control circuit. 86. Acceleration and deceleration computing unit. 87. Integrator. 88. F/V converting unit. 89. Voltage command computing unit. 90. PWM computing unit. 91. P-I computing unit. 92. Command value control unit. 93. F/V converting unit. 94. Coordinate converting unit. 95. Vector computing unit. 96. Adder. 97. P-I computing unit. 98. Command value control circuit.

### The Best Mode for Carrying out the Invention

Fig. 1 is a circuit diagram showing a first embodiment of the control method of induction motor of the present invention, and identical signals are allotted to the components having the identical functions as the prior configuration shown in Fig. 9.

Specifically, the circuit configuration shown in Fig. 1 includes a commercial power source 1; load 5; the VVVF inverter 8 consisting of an inverter main circuit 81 for converting the AC voltage of the commercial power source 1 into a DC voltage by means of diode rectifiers and smoothing capacitors, and for bridge connecting the back-to-back connecting circuit consisting of transistors and diodes for converting this DC current into an AC current, a current detector 81a such as shunt resistor for detecting the output current of this inverter main circuit 81, and the inverter control circuit 82 having a control function for outputting an AC voltage of frequency and voltage desired by the inverter main circuit 81 by having the transistor mentioned above turn "ON" and "OFF" by for example PWM, and a current limiting function for reducing the output voltage of the inverter main circuit 81 for reducing the output current to not higher than a predetermined upper limit when the value detected by the current detector 81a exceeded this upper limit (for example, approximately 150% of the rated output current level of the inverter main circuit 81); an induction motor 9 of which the primary winding is delta connected, an electromagnetic contactor 10; and the closing circuit 11 of the electromagnetic contactor 10. More specifically, the circuit configuration is made in such a way that the AC voltage of the inverter 8 may be fed to the primary winding of the induction motor 9 through the electromagnetic switch 10. And the closing command signal from the closing circuit 11 is outputted respectively to the electromagnetic switch 10 and the inverter 8, and the electromagnetic switch 10 can change over its opening or closing position depending on the closing command, and the inverter 8 can control the output of AC voltage by the input of a closing command.

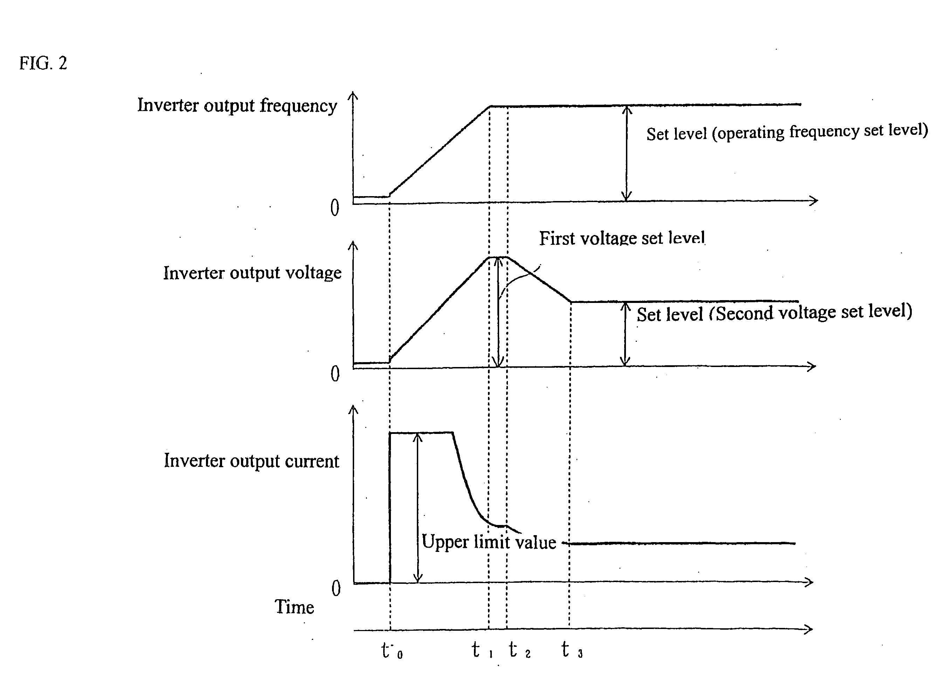

The operation of the circuit configuration shown in Fig. 1 will be described below with reference to the wave form chart shown in Fig. 2.

In the first place, the electromagnetic switch 10 is open, and the VVVF inverter 8 is started while the voltage of the commercial power source 1 is steady, and the VVVF inverter 8 is put into the state of outputting an AC voltage of the frequency and voltage predetermined by the VVVF inverter (for example the allowable lowest voltage and the allowable lowest frequency) by the control operation of the inverter control circuit 82.

At the time to thereafter, the induction motor 9 and the load connected therewith are started as the electromagnetic contactor 10 is closed by a closing command of the closing circuit 11, and the induction motor 9 and the load 5 begin rotating slowly. At the same time, in response to the control operation of the inverter control circuit 82 based on the closing command mentioned above, the VVVF inverter 8 begins outputting AC voltage of which the frequency and voltage are slowly raised almost in a straight line from the AC voltage of the allowable lowest voltage and the allowable lowest frequency towards the frequency set level set for output frequency (operating frequency set level) and the first voltage set level set in an overvoltage state corresponding to the operating frequency set level as shown in Fig. 2.

The inverter control circuit 82 monitors through the current detector 81a the output current of the inverter main circuit 81 while this frequency and voltage are gradually raised, and when it is found as a result of this monitoring that the output voltage exceeds the predetermined upper limit, the control operation of the inverter control circuit 82 curtails any increase in the amplitude of the output voltage of the inverter main circuit 81 so that the output current may be reduced to a level not higher than the upper limit described above, and while this condition is maintained, this inverter VVVF inverter 8 keeps on outputting an AC voltage of which the frequency and voltage are gradually raised as shown in Fig. 2 and the induction motor 9 keeps on accelerating.

At the time t₁, the increased output frequency of the VVVF inverter 8 has already reached the predetermined frequency set level (operating frequency set level), and until this time t₁, the induction motor 9 is in a state of already having completed its acceleration operation. Therefore, since the time has already passed in which the induction motor 9 requires a very large driving torque at the time of startup and acceleration of the load 5, and as shown in Fig. 2, the output current of the VVVF inverter 8 has got out of the upper limit value described above and has already decreased.

Beginning with the time t₂ having passed some time from the time t₁ mentioned above, in response to the control operation of the inverter control circuit 82, the VVVF inverter 8 begins outputting an AC voltage of which only the output voltage of the VVVF inverter 8 is gradually reduced with passage of time almost in a straight line from the time t₂ to the time t₃ towards the second voltage set level as shown in Fig. 2 while maintaining the output frequency of the VVVF inverter 8 at the operating frequency set level described above. Here, for the time t₂ when the output voltage of the VVVF inverter 8 begins decreasing, the timing when the inverter control circuit 82 has confirmed by the value detected by the current detector 81a that the output current of the inverter has decreased to a predetermined value, or the timing corresponding to the time t₂ that has arrived according to a timer not shown may be chosen, the length of time from the time t₀ to the time t₂ having been previously determined by experiment. In other words, this timing may be any time after the time t₁. And it is possible to detect the rotation angle of the load 5 in place of the determination of time and to proceed to the control mentioned above by the detected angle.

During the period of time t₂-t₃ mentioned above, when textile machines or the like require a small driving torque of the induction motor 9, the output voltage of this VVVF inverter 8 is reduced to the second voltage set level (for example, 1/√3 times of the output voltage at the time t₁, or the value of output voltage at which the torque required by the load 5 can be obtained) while its output frequency is maintained at the frequency set level. By this operation, the efficiency and power factor of the induction motor 9 for the output current and the output voltage at the time t₃ are improved than those for the output current and the output voltage at the time t₁, and therefore a smaller current will be enough. In other words, since the driving torque of an induction motor of which the primary winding is delta connected is approximately triple of that of an induction motor of which the primary winding is star connected, the output voltage after the time t₃ can be reduced to approximately 1/√3 times of the output voltage at the time t₁. As a result, the induction motor 9 after the time t₃ is in a state of energy-saving operation.

As it is clear from the description of operation above, the continuous rated value of the induction motor 9 of which the primary winding is delta connected can be set from the value after the time t₃ described above, and the driving torque at the time of startup and acceleration and the output voltage/output frequency (V/F) ratio of the induction motor 9 can be outputted as a short-period rated value.

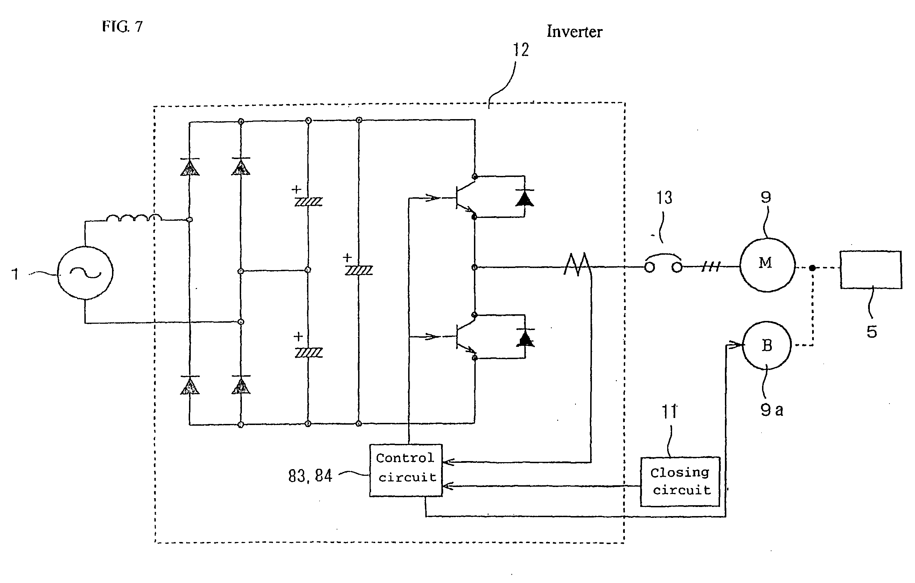

And the embodiment above described the induction motor as one having a delta-connected primary winding, but the present embodiment is not limited to this and can have a star-connected primary winding. In this case, at the time of startup of the induction motor, it is necessary to feed the induction motor with overvoltage power, and the inverter 12 can address to this situation by constituting the main circuit with a voltage doubler circuit as the one shown in Fig. 7 described below. For example, in order to generate a driving torque required during the time of delta connection at the time of startup of the induction motor, it is enough to set the first voltage set level (short-period rated V/F ratio) in such a manner that a voltage of approximately √3 of the second voltage set level which is a voltage set level for steady operation may be outputted. Incidentally, the first voltage set level is not limited to be the √3 times of the second voltage set level mentioned above but may be set freely within a range above one and not prejudicial to the operation of the induction motor.

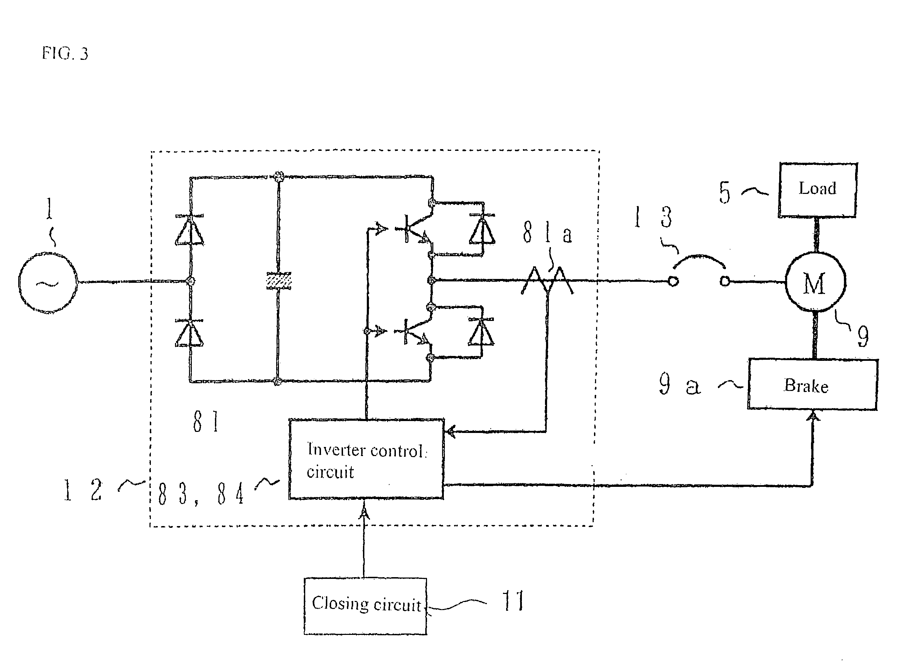

Fig. 3 is a circuit diagram showing a second embodiment of method of controlling the induction motor of the present invention, wherein the components having the identical function with the first embodiment shown in Fig. 1 are marked with identical signals.

Specifically, the circuit configuration shown in Fig. 3 includes the VVVF inverter 12 replacing the VVVF inverter 8 illustrated and consisting of the inverter main circuit 81, the current detector 81a and any one of the inverter control circuit 83 or the inverter control circuit 84, the induction motor 9 having a brake 9a on any one of the output shaft of the induction motor 9 or load 5, and a circuit breaker 13 replacing the electromagnetic contactor 10 shown in Fig. 1 in the path between the VVVF inverter 12 and the induction motor 9. This circuit breaker 13 is normally closed, and is opened manually as required at the time of maintenance and checkup of the induction motor 9 and the like.

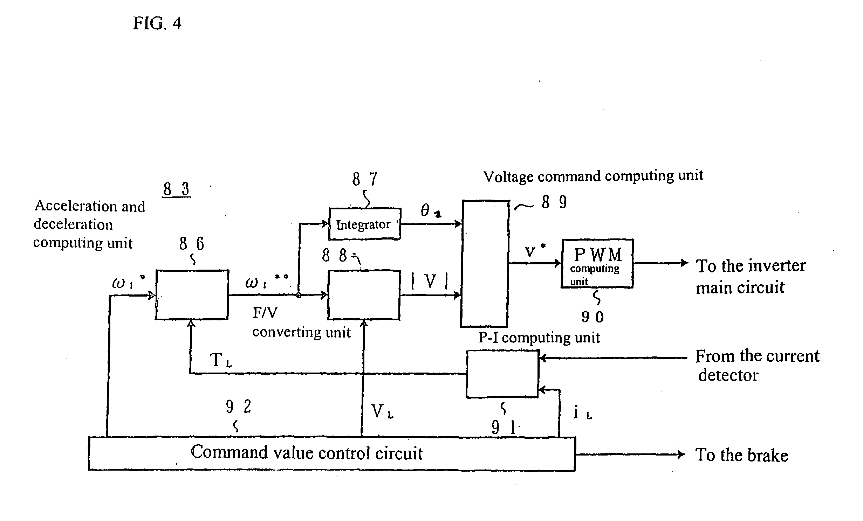

Fig. 4 is a detailed enlargement of the circuit diagram of the inverter control circuit 83 in the VVVF inverter 12 shown in Fig. 3 wherein the acceleration and deceleration computing unit 86 increases or decreases a frequency command value ω₁* to the induction motor 9 set by the command value control circuit 92 by a predetermined rate of increase or decrease, finally outputs a frequency command value ω₁** equal to the frequency command value ω₁*, and a proportion-integral (P-I) computing unit 91 calculates an acceleration time in which the value detected by the current detector 81a would not exceed the current limit value (upper limit value) i_{L} given by the command value control circuit 91 at the time of acceleration of the induction motor 9 described below, and outputs a frequency command value ω₁** of a rate of increase corresponding to this acceleration time. The frequency command value ω₁** from this acceleration and deceleration computing unit 86 is inputted into the integrator 87 and the F/V converting unit 88. The integrator 87 outputs a phase angle set level θ₁ obtained by time integrating the frequency command value ω₁** inputted to the voltage command computing unit 89, and the F/V converting unit 88 outputs a voltage set level |V| on the basis of the frequency command value ω₁** inputted and the predetermined V/F ratio to the voltage command computing unit 89. Based on the phase angle set level θ₁ and the voltage set level |V| inputted therein, the voltage command computing unit 89 calculates the voltage command value v* of each phase of the induction motor and gives the same to the pulse width modulation (PWM) computing unit 90. The PWM computing unit 90 supplies on-off driving signals corresponding to the voltage command value* of each phase given by this voltage command computing unit 89 to each transistor constituting the inverter main circuit 81.

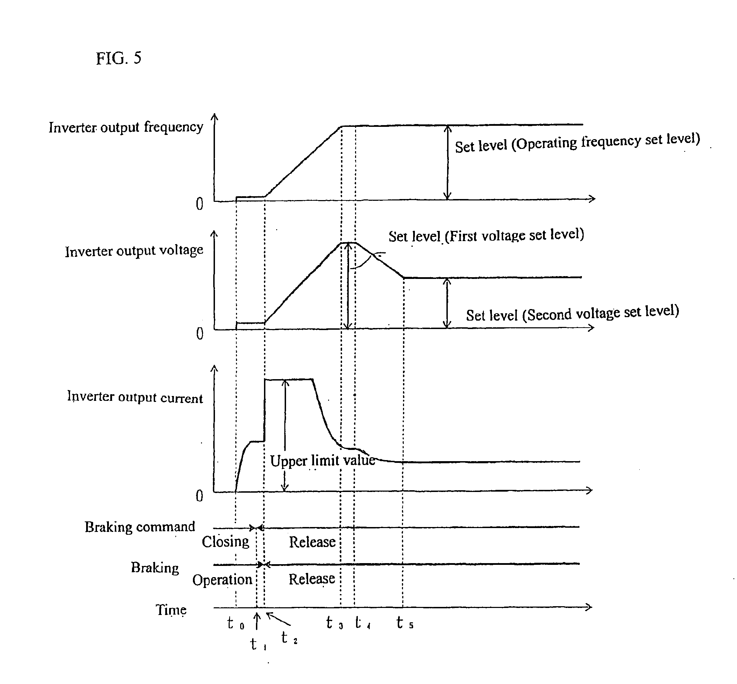

The operation of the VVVF inverter 12 containing the inverter control circuit 83 and the operation of the induction motor 9 and the brake 9a in the circuit configuration shown in Fig. 3 will be described below with reference to the operation waveform chart shown in Fig. 5.

In the first place, at the time to when the brake 9a connected with the induction motor 9 is operating according to commands given by the command value control circuit 92, the VVVF inverter 12 generates an AC voltage based on a frequency command value ω₁* required for the accelerating operation of the induction motor 9 at the time t₂ described below from the command value control circuit 92 (ω₁* is a frequency for building up a magnetic flux, for example approximately 10 Hz) and based on a voltage command value base on the V/F ratio thereof, and when this AC current is fed for a fixed time (approximately several hundreds mS) based on the secondary time constant of the induction motor, the induction motor 9 which is constraint by the operation of the brake 9a is excited. Such a preliminary excitation before the startup of the induction motor 9 lead to the activation of the magnetic flux of the motor. By proceeding to this operation, it is possible to suppress the inrush current at the time of the startup of the induction motor 9 at the time t₂ mentioned below, and to establish the starting torque.

Then, when the brake 9a becomes almost fully disengaged at the time t₂ in response to a release command emitted by the command value control circuit 92 to the brake 9a at the time t₁, the proportion-integration (P-I) computing unit 91 calculates an acceleration time during which the value detected by the current detector 81a detecting the output current of the VVVF inverter 12 does not exceed the current limit value i_{L} given by the command value control circuit 91. The acceleration and deceleration computing unit 86 increases the frequency command value ω₁** by a rate of increase corresponding to this acceleration time and outputs the same, and as a result increases gradually the output voltage and the output frequency of the VVVF inverter 12 by the fixed rate of increase mentioned above, resulting in an acceleration of the induction motor 9.

When the output frequency of the VVVF inverter 12 has reached the predetermined frequency set level (time t₃), the acceleration and deceleration computing unit 86 suspends the subsequent frequency command values ω₁**. And during a period lasting from the time t₄ sometime later than the time t₃ through the time t₅, the VVVF inverter 12 that feeds the induction motor 9 with power gradually decreases the output voltage of the inverter to the second set voltage value as shown in the figure (for example, 1/√3 times of the output voltage at the time t₄, or the value of an output voltage at which a torque required by the load 5 is obtained) while maintaining its output frequency at the operating frequency set level mentioned above.
At this moment, the induction motor 9 enters into an energy-saving operating mode. Here, for the time t₃ when the output voltage of the VVVF inverter 12 begins decreasing, the timing when the inverter control circuit 83 has confirmed by the value detected by the current detector 81a that the output current of the inverter has decreased to a predetermined value, or the timing corresponding to the time t₄ that has arrived according to a timer not shown may be chosen, the length of time from the time t₂ to the time t₄ having been previously determined by experiment. In other words, this timing may be any time after the time t₃. At this time, from the time t₄ to the time t₅, the setting of the rate of decrease of the limit set level V_{L} at a value corresponding to the secondary time constant of the induction motor 9 opens the way towards a smooth shift in the operating condition of the induction motor 9.

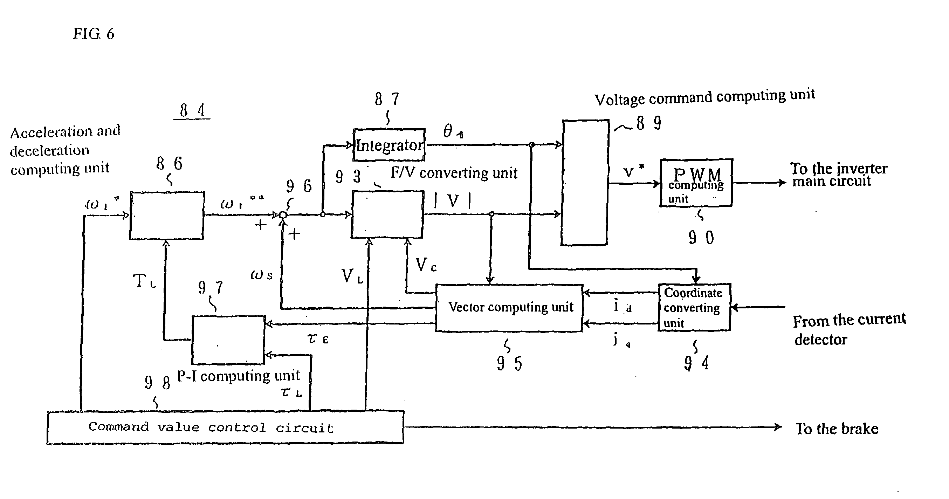

It should be noted that various set levels such as preliminary excitation frequency, preliminary excitation voltage, V/F ratio, timing for starting the induction motor, operation frequency set level, the first and second voltage set level, and the upper limit for limiting output current and the like are set previously in the command value control circuit 92 (command value control circuit 98 in Fig. 6 described below) through a setting unit not shown.

With regard to a preferable method of increasing output voltage for increasing the output frequency and output voltage of the inverter by the predetermined rate of increase, it is possible to increase them gradually by outputting successively the output voltages corresponding to the increased frequencies in accordance to the predetermined voltage-frequency ratio (V/F ratio). Incidentally, the voltage-frequency ratio (V/F ratio) used for increasing frequency is set by the frequency set level at the end of startup (operating frequency set level) and predetermined voltage set level (the first voltage set level) and the one set thereby.

The set level of voltage (the second voltage set level) used at the following step of decreasing the output voltage while maintaining the output frequency at the set level of frequency is set in such a way that the voltage corresponding to the steady operation of the induction motor may be outputted. On the other hand, the predetermined voltage set level mentioned above (the first voltage set level) is set at a greater value than the former set level of voltage (the second voltage set level). As a result, when the output frequency has reached the predetermined set level of frequency (operating frequency set level) due to an increase in frequency, the output voltage may be gradually increased to reach the predetermined voltage set level (the first voltage set level) set higher than the set level of voltage used for decreasing the output voltage of the following step (the second voltage set level) and within a range wherein adequate startup is possible. As for the setting of rate of increase of frequency, a fixed rate of increase may be set, or a chronologically increasing or decreasing rate of increase may be set, and its mode of increase may be set to be changing continuously or in stages.

Fig. 6 is a detailed enlargement of the circuit diagram of the inverter control circuit 84 in the VVVF inverter 12 shown in Fig. 3 wherein the components having the identical functions as those of the circuit configuration shown in Fig, 4 are allocated the same signals.

Specifically, this inverter control circuit 84 includes the acceleration and deceleration computing unit 86, the integrator 87, the voltage command computing unit 89, the PWM calculating unit 90, the F/V converting unit 93 having almost the same function as the F/V converting unit 88 mentioned above, the coordinate converting unit 94 for converting the value detected by the current detector 81a into the phase angle set level θ₁ mentioned above and for decomposing the same into a current component i_{d} of the same phase with the excitation current of the induction motor 9 and a current component iq of the same phase with the torque current, the vector computing unit 95 for computing the calculated value of torque τ_{E}, the slipping frequencyωs and the primary voltage corrected value V_{c} of the induction motor 9 by a known art from this excitation current component i_{d}, the torque current component iq, the aforementioned voltage set level |V| and the electric constant of the induction motor 9, the P-I computing unit 97 having almost the same functions as the P-I computing unit 91 mentioned above, and the command value control circuit 98 having almost the same functions as the command value control circuit 92 mentioned above.

In the circuit configuration shown in Fig. 3, the operation of the VVVF inverter 12 including the inverter control circuit 84 and the operation of the induction motor 9 and the brake 9a are almost the same as the operations described in the operating waveform chart shown in Fig. 5 above. And from the moment when the brake 9a was almost released in response to a release command given by the command value control circuit 98 to the brake 9a, the acceleration time during which the calculated value of output torque (τ_{E}) of the induction motor would not exceed the limit value of torque τ_{L} emitted by the command value control circuit 98 is deduced by the proportion-integration (P-I) computing unit 97, and the output of the frequency command value ω₁** of a rate of increase corresponding to this acceleration time by the acceleration and deceleration computing unit 86 leads to a gradual increase of the output voltage and output frequency of the VVVF inverter 12, and the value obtained as a result of the addition of the slipping frequency ωₛ to the frequency command value ω₁** by the adder 96 and the addition correction operation to the voltage set level |V| based on the primary voltage corrected value V_{c} in the F/V converting unit 93 serve as the basis for the induction motor 9 to accelerate more quickly.

In addition, the embodiment shown in Fig. 6 does not use the V/F ratio as in the embodiment described above for increasing output voltage as in the case of the device shown in Fig. 5 and adjusts the output frequency and output voltage by vector calculations based on the so-to-speak torque current actually measured.

Now, the second embodiment described above (Fig. 3 - Fig. 6) can be modified as follows.

With regard to the primary winding of the induction motor 9, the embodiment mentioned above adopted the delta connection. But a star-connected induction motor can also be adopted.

With regard to the control method of the inverter mentioned above, in addition to generally the system of controlling the current flowing in motor or the current type, the type of controlling voltage impressed on the motor or the voltage type may be adopted. In the case of the voltage type described above, any one of the PAM system of changing directly voltage or the PWM system of varying the width of switching pulses of transistor can be adopted, and as a more preferable type for the latter, the quasi-sine wave PWM system, a system of varying switching pulse width of transistors so that the output average voltage may be more sine wave can be adopted. In any case, the output voltage will be handled as indicating not the peak value but the average value (effective value) of voltage.

With regards to the first and the second embodiments mentioned above, the load 5 may be a textile machine, for example a loom. All the looms are required to sharply increase the rotating speed of their main shaft at the time of startup of the loom from the viewpoint of preventing weaving bars. For this reason, the first voltage set level at the time of startup should be set at a value above the second voltage set level which is the output voltage during steady operation and the induction motor should be fed in an overvoltage state at the time of startup. As for the induction motor, it is possible to use a general-purpose induction motor of which the primary winding is delta-connected or star-connected. For example, when a motor of which the primary winding is delta-connected at the time of startup and switched to star-connected after rising to the steady operation to be used thereafter as an induction motor to be used for loom preferably for preventing any weaving bars, for example, when the induction motor is connected with the inverter while the primary winding is delta connected and outputs voltage by using the V/F ratio at the time of increasing output frequency and output voltage, setting the first voltage set level and the second voltage set level at a proportion of √3:1 results in an overvoltage feeding of the induction motor from the time to to the time t₂ shown in Fig. 2 or Fig. 5. Therefore, a startup characteristic similar to that of feeding from the commercial power source can be obtained, and the rotation speed of the loom can be sharply increased. In any case described above, however, an overvoltage feeding will be made temporarily, but in view of a very short length of time of power feeding, this does not affect much the temperature rise of the induction motor.

When it is necessary to feed a higher voltage than the peak value of the commercial power source for overvoltage feeding of the primary winding at the time of startup of the induction motor, all that is necessary is to constitute the inverters 8 and 12, for example, as shown in Fig. 7. The main circuit of the inverter shown in Fig. 7 in which capacitors and diodes work together to increase the voltage to twice the peak value of the commercial power source of a single phase and outputs the same to capacitors. A case of constituting so-called "voltage doubler circuit." The commercial power source for feeding power is not limited to a single-phase power source, but may be a three-phase or other multiphase power source. Or a high voltage maybe generated in the place of the main circuit mentioned above, or by using a generally known chopping circuit, or the input used voltage of the inverter may be set at many times the commercial power source and the voltage supplied to the inverter is increased by a transformer and the increased voltage is supplied to the capacitors. These are examples of various possible methods.

In the case of an induction motor for driving a loom, for the frequency and voltage (amplitude) for preliminary excitation in the second embodiment (Fig. 3 - Fig. 6) mentioned above, any frequency and voltage sufficient to build up a magnetic flux is enough. It is desirable to set them by taking into account the inrush current permitted by the inverter (the capacity of inverter) although no specific value is indicated. With regard to voltage, from the viewpoint of saving energy, it is more preferable to set a voltage value below the voltage value corresponding to the saturated current (a state of no further increase in current even if voltage is increased) in the primary winding at the time of preliminary excitation.

And the operating frequency set level may be set in response to the desired rotation speed for the induction motor 9, or the load 5. By so doing, the effect mentioned above can be obtained and the load 5 can be easily driven at the desired rotation speed.

When the output frequency and the output voltage of the inverter are to be increased toward the predetermined operation frequency and the first voltage set level, preferably the output current of the inverter should be limited to not higher than the predetermined upper limit. Due to the limitation of the output current of the inverter to not higher than the upper limit, voltage falls in the textile mill resulting from an inrush current can be suppressed at the time of start up of the induction motor. And it becomes possible to adopt inverters having a smaller capacity than the capacity of power equipment in the whole textile mill wherein a large number of looms are disposed. And it will be possible to adopt inverters having a capacity smaller than the previous ones, and to reduce the production costs of looms. And it is more preferable that the inverter would take controlling operation to limit the output torque of the induction motor in order to reduce its output current to not higher than the upper limit.

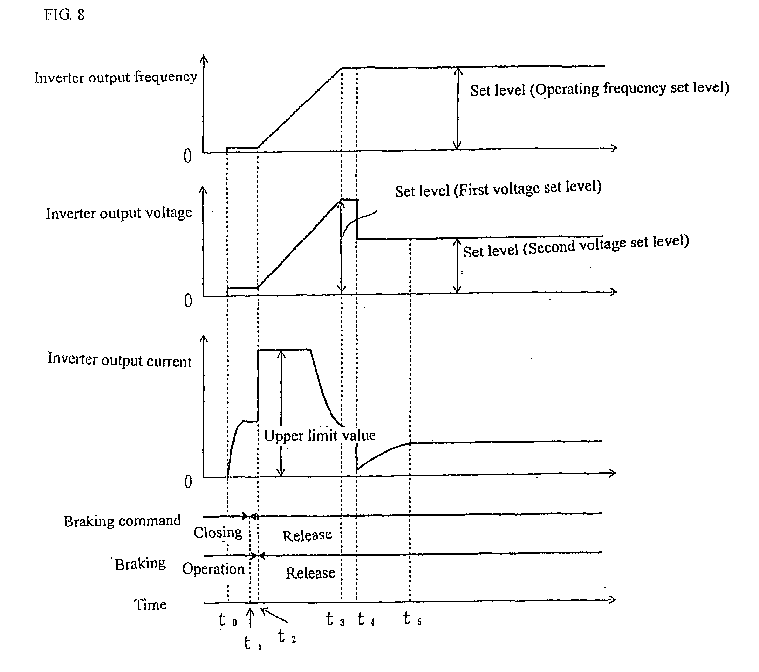

And when the inverter reduce only its output voltage to the predetermined voltage set level while keeping its output frequency, the embodiment described above reduce such values by the specified rate of decrease. However, the inverter may gradually decrease its output voltage by different rates of decrease with the passage of time. And as shown in Fig. 8, this may be done by changing at a time the output voltage at the time t₄ from the first voltage set level to the second voltage set level. By so doing, the output torque from the induction motor may decrease temporarily and may generate a shock to the load. However, due to a large inertia of the load, such a problem does not occur. The change over to the second voltage set level is to be made in a single step, but this can be reduced in several steps. Thus, the specific manner of reducing the output voltage from the first voltage set level to the second voltage set level can be varied.

The more specifically shown details of the second embodiment of the control method of the induction motor described above and the variation thereto can be applied likewise to the art of the first embodiment.

### Industrial Applicability

According to the present invention, the induction motor can be started and accelerated with a smaller amount of primary current with power supplied by a general- purpose variable voltage variable frequency (VVVF) inverter. And once this startup and acceleration have been completed, textile machines can be operated with a small driving torque from the induction motor. Therefore, the operating efficiency and power ratio of the induction motor can be improved by decreasing only the output voltage of the VVVF inverter, and thus it will be possible to respond to the requirement for energy saving of these days.

## Claims

1. Control method of induction motor wherein a variable voltage variable frequency inverter outputting AC voltage of the allowable lowest frequency and the allowable lowest voltage to an induction motor of which the primary winding is star-connected begins feeding power to start the motor, then the inverter increases its output frequency and output voltage, and after this output frequency has reached the predetermined frequency set level, the inverter decreases only the output voltage to the predetermined voltage set level while keeping the output frequency at the frequency set level mentioned above, and then the inverter feeds the induction motor with an AC voltage based on said voltage set level and the frequency set level.

2. Control method of induction motor wherein a brake connected with the induction motor or a load of the induction motor, while in operating condition, makes a variable voltage variable frequency inverter output an AC voltage having a predetermined frequency and amplitude to begin feeding the induction motor with power and to put the induction motor in an excited state, then at a timing when the brake is almost released in response to a release command is given to the brake, the output frequency and the output voltage of the inverter are increased, and after this output frequency has reached the predetermined frequency set level, the inverter decreases only the output voltage to the predetermined voltage point while keeping the output frequency at the frequency set level, and then the inverter feeds the induction motor with an AC voltage based on the frequency set level and the voltage set level.

3. Control method of induction motor according to claim 1 or 2 wherein the operating frequency set level is set in response to the desired rotation speed of the induction motor.

4. Control method of induction motor according to claim 1 or 2 wherein the inverter limits the output current to not higher than the predetermined upper limit when the output frequency and the output voltage of the inverter are to be increased.

5. Control method of induction motor according to claim 1 or 2 wherein the inverter gradually decreases the output voltage by a predetermined rate of decrease when only the output voltage is to be decreased to the predetermined voltage set level while maintaining its output frequency at its current level.

6. Control method of induction motor according to claim 1 or 2 wherein the inverter proceeds to a slipping compensation and a primary voltage compensation of the induction motor by proceeding to a vector control of said induction motor when the output frequency and the output voltage of the inverter are to be increased.

7. Control method of induction motor according to claim 4 wherein the inverter proceeds to a control operation for limiting the output torque of the induction motor to limit its output current to not higher than the upper limit mentioned above when the output frequency and the output voltage of the inverter are to be increased while limiting the output current thereof to not higher than the predetermined upper limit.

8. Control method of induction motor according to claim 5 wherein the rate of decrease to be predetermined in the inverter is set at a value based on the secondary time constant of the induction motor.
